# NEUE EUROPÄISCHE PATENTSCHRIFT

(11) **EP 0 735 650 B2**
(45) Veröffentlichungstag und Bekanntmachung des Hinweises auf die Entscheidung über den Einspruch: **30.05.2007**
(45) Hinweis auf die Patenterteilung: 18.08.1999
(21) Anmeldenummer: 96104701.6
(22) Anmeldetag: 25.03.1996
(51) Int. Cl.: H02K 11/04

(54) **Elektromotor**
Electric motor
Moteur électrique

(30) Priorität: 25.03.1995 DE 19511114
(43) Veröffentlichungstag der Anmeldung: 02.10.1996
(73) Patentinhaber: GRUNDFOS A/S, DK-8850 Bjerringbro (DK)
(72) Erfinder: Jensen, Niels Due, 8850 Bjerringbro (DK); Danielsen, Carl-Christian, 8550 Ryomgard (DK); Kimer, Jorgen, 8660 Skanderborg (DK)
(74) Vertreter: Vollmann, Heiko

(56) Entgegenhaltungen:
- EP-A- 0 531 200
- EP-A- 0 619 432
- DE-A- 4 243 044
- DE-C- 3 642 724
- US-A- 4 668 898

## Beschreibung

Die Erfindung betrifft einen frequenzumrichtergespeisten Elektromotor mit den im Oberbegriff des Anspruches 1 angegebenen Merkmalen.

Frequenzumrichtergespeiste Elektromotoren der eingangs erwähnten Art werden heutzutage vermehrt insbesondere zum Antrieb von Strömungsarbeitsmaschinen, wie z. B. Kreiselpumpen und Gebläsen eingesetzt. Gerade bei derartigen Maschinen kann durch Varianz der Drehzahl, insbesondere durch das bei Frequenzumrichterspeisung mögliche Anheben der Drehzahl das Leistungsfeld bei günstigen Wirkungsgraden nach oben hin erweitert werden, da ihre Leistung mit der dritten Potenz der Antriebsdrehzahl steigt. Andererseits kann die durch die Frequenzumrichterspeisung mögliche Drehzahlvarianz auch im Teillastbereich Vorteile bringen, da bei entsprechender Regelung die der erforderlichen Leistung entsprechende Drehzahl eingestellt werden kann, so daß das Aggregat mit angepaßtem Energieaufwand arbeitet.

Zum Antrieb solcher Aggregate sind sogenannte Normmotoren bekannt, die von namhaften Pumpenherstellern angeboten werden. Es handelt sich dabei um Motorbaureihen, die hinsichtlich ihrer Leistung so abgestuft sind, daß sich für jeden Anwendungsfall ein passender Antriebsmotor finden läßt.

Insbesondere bei Motoren höherer Leistung benötigt auch der Frequenzumrichter einen erheblichen Raumbedarf. Zum einen benötigen die Kondensatoren des Leistungskreises des Frequenzumrichters mit zunehmender Motorleistung mehr Raum, zum anderen wird die Abfuhr der im Leistungkreis des Frequenzumrichters erzeugten Verlustwärme mit wachsender Motorleistung problematischer.

Es ist bekannt, den Frequenzumrichter seitlich am Motorgehäuse nach Art eines Klemmenkastens anzuflanschen und durch Konvektionskühlung oder aber durch den Kühlluftstrom des Motors zu kühlen. Doch dies ist bei Motoren größerer Leistung ebenfalls kritisch, da zum einen die Kühlung des Frequenzumrichters Probleme bereitet und zum anderen die räumlichen Abmessungen des Frequenzumrichters den Einsatz des Elektromotors beschränken.

Aus EP-A1-0 619 432, von der die Erfindung ausgeht, ist ein gattungsgemäßer frequenzumrichtergespeister Elektromotor bekannt. Bei diesem Motor ist der Frequenzumrichter nicht seitlich, sondern rückseitig, also in Verlängerung des Motorengehäuses angebracht, wobei das Frequenzumrichtergehäuse über einen als Lüfterhaube ausgebildeten Gehäuseteil an das Motorgehäuseteil anschließt, derart, daß der vom Motorlüfter erzeugte Luftstrom zunächst im wesentlichen radial anströmt, um dann nach Durchtritt durch das Lüfterrad längs der Kühlrippen des Motors zu strömen. In dem Einströmbereich, in dem der Luftstrom im wesentlichen radial gerichtet ist, überstreicht dieser einen Kühlkörper, der Teil des Frequenzumrichtergehäuses ist.

Aufgrund der ausschließlich radialen Luftführung im Bereich des Kühlkörpers ist die Kühlwirkung dieser bekannten Konstruktion sehr begrenzt, da die Strecke, über welche die anströmende Luft Wärme des Frequenzumrichters aufnehmen kann, vergleichsweise kurz ist. Darüber hinaus haben diese ausschließlich innen liegenden Kühlrippen den Nachteil, daß eine Konvektionskühlung nach außen aufgrund der räumlichen Anordnung der Kühlrippen praktisch nicht möglich ist.

Aus US-4,668,898 ist ein frequenzumrichtergespeister Elektromotor mit einem Kühlluftgebläse bekannt, bei dem der Frequenzumrichter in einem berippten Gehäuse rückseitig des Motors angeordnet ist, so daß eine wirksame Kühlung des Frequenzumrichters auch in Bereichen außerhalb des Kühlluftstromes durch Konvektionskühlung erfolgen kann. Nachteilig hierbei ist jedoch, daß das gesamte Frequenzumrichtergehäuse der Kühlung dient und insoweit konstruktiv gebunden ist.

Vor diesem Stand der Technik liegt der Erfindung die Aufgabe zugrunde, unter Vermeidung der vorgeschilderten Nachteile ein gattungsgemäßes Aggregat so auszubilden, daß einerseits eine intensive Kühlung des Frequenzumrichtergehäuses erreicht und andererseits das Frequenzumrichtergehäuse in weiten Bereichen frei gestaltbar ist. Darüber hinaus soll eine kompakte und die Verlustwärme des Frequenzumrichters gut abführende Konstruktion geschaffen werden, die einfach und kostengünstig in der Herstellung ist.

Diese Aufgabe wird gemäß der Erfindung mit den Merkmalen des Anspruchs 1 gelöst.

Die erfindungsgemäße Lösung sieht vor, daß der Frequenzumrichter in Flucht zum übrigen Motorgehäuse angeordnet ist und der Kühlluftstrom des Motors gezielt auch zur Kühlung des Frequenzumrichters ausgenutzt wird. Dabei ist das Frequenzumrichtergehäuse so ausgebildet, daß ein Gehäuseteil zugleich die Lüfterhaube des Motors bildet. Auf diese Weise kann ein und dasselbe Motorgehäuse wahlweise mit Frequenzumrichter oder aber auch nur mit der üblichen Lüfterhaube, also ohne Frequenzumrichter ohne konstruktive Änderungen bereitgestellt werden. Die Integration des Motorlüfters in das Frequenzumrichtergehäuse hat zudem den Vorteil, daß durch entsprechende Strömungsführung innerhalb des Frequenzumrichtergehäuses eine gezielte Wärmeabfuhr durch den gesamten Kühlluftstrom des Motors erfolgen kann. Des weiteren läßt sich eine sehr kompakte Bauweise realisieren, da auch der sonst nicht genutzte Raum im Bereich der Lüfterhaube für Bauteile bzw. Kühlteile des Frequenzumrichters nutzbar ist. Der so gebildete frequenzumrichtergespeiste Elektromotor ist kompakt und schlank im Aufbau, so daß in der Mehrzahl der Anwendungsfälle die durch den Frequenzumrichter bedingte Vergrößerung der Bauform keine Probleme bereitet. Gemäß der Erfindung ist das erste Gehäuseteil des Frequenzumrichtergehäuses mit einer Querwand versehen und diese Querwand zum wärmeleitenden Anschluß der wärmeerzeugenden Bauteile des Leistungskreises vorgesehen und ausgebildet. Deshalb kann nämlich die Wärmeankopplung unabhängig von der Baugröße des Frequenzumrichters über einen entsprechenden Heatspreader an dieser Planfläche erfolgen, so daß eine gute Wärmeableitung erzielt wird. Denn dieses erste Teil ist das Gehäuseteil, in dem der Kühlluftstrom zwangsgeführt ist, d. h., das intensiv von Kühlluft durchströmt wird. Die weiteren Gehäuseteile des Frequenzumrichters brauchen daher hinsichtlich der Wärmeabfuhr nicht besonders ausgebildet zu werden. Um die Wärmeabfuhr dieses ersten Gehäuseteiles weiter zu verbessern, sind sowohl innen als auch außen eine Vielzahl von Kühlrippen vorgesehen, wobei im Fußbereich der äußeren Kühlrippen Durchbrüche vorgesehen sind, durch welche der Kühlluftstrom zum Lüfterrad hin eintritt. Hierdurch wird die Kühlung des Frequenzumrichters bei vergleichsweise kleiner Baugröße noch weiter intensiviert. Das erste Gehäuseteil des Frequenzumrichters ist im Bereich seiner Querwand an die Topographie der Leistungselektronik einerseits und der Außenkontur des Lüfterrades andererseits angepaßt, was sowohl einer gezielten Wärmeabfuhr als auch einer kompakten Bauform dient. An dieses erste Gehäuseteil schließt sich dann ein weiteres Gehäuseteil an, das ausschließlich Gehäusefunktion haben kann und daher konstruktiv weitgehend frei gestaltbar ist.

Bevorzugt ist das Frequenzumrichtergehäuse modular aufgebaut, so daß für eine Motorbaureihe gleichen Außenquerschnittes das erste wärmeleitende Gehäuseteil des Frequenzumrichters stets unverändert und lediglich das weitere durch ein rohrförmiges Hohlprofil gebildete Gehäuseteil variiert wird. Diese Varianz erfolgt ausschließlich in der Länge, d. h., die Anpassung des Frequenzumrichtergehäuses an die jeweilige Motorgröße erfolgt, indem dieses rohrförmige Hohlprofil in entsprechender Länge angesetzt wird. Der dieses Hohlprofil endseitig abschließende Deckel kann ebenfalls bei allen Ausführungen gleich bleiben.

Insbesondere für Motoren kleiner Baugröße kann es zweckmäßig sein, das erste und das weitere Gehäuseteil des Frequenzumrichtergehäuses einstückig, beispielsweise als Gußteil auszubilden.

Das Frequenzumrichtergehäuse kann ohne Probleme spritzwassergeschützt oder auch hermetisch abgeschlossen sein, indem beispielsweise zwischen dem ersten Gehäuseteil und dem Profilgehäuseteil sowie zwischen dem Profilgehäuseteil und dem Deckel entsprechende Dichtungsmittel vorgesehen sind. Es versteht sich, daß auch die Kabeldurch- bzw. -herausführungen im Frequenzumrichtergehäuse entsprechend geschützt ausgebildet sind.

Fertigungstechnisch besonders günstig ist es, das erste Gehäuseteil als metallisches Gußteil auszubilden, das gut wärmeleitfähig ist und das weitere Gehäuseteil als Rohrabschnitt eines entsprechenden Metallprofilrohres.

Die elektrische Leitungsverbindung zwischen dem am Motorgehäuse vorgesehenen Klemmenkasten und dem Frequenzumrichter kann vorteilhaft durch ein an der Außenseite des Motorgehäuses angeordnetes Rohr erfolgen, das einerseits im Klemmenkasten und andererseits im Frequenzumrichtergehäuse mündet. Die im Rohr befindlichen elektrischen Leitungen liegen dort geschützt und gut zugänglich. Und auch diese Ausbildung ermöglicht den Anschluß desselben Motors sowohl über den Klemmenkasten direkt an das elektrische Versorgungsnetz oder aber über den Klemmenkasten an den Frequenzumrichter und von dort an das elektrische Versorgungsnetz je nach Ausstattung des Motors.

Wenn der Elektromotor im Querschnitt eine etwa rechteckige Außenkontur aufweist, wie dies bei modernen Motoren dieser Art üblich ist, dann wird dieses Rohr vorzugsweise im Eckbereich angeordnet, da dieser Raum für den eigentlichen Motor ohnehin nicht nutzbar ist und der Lüfterflügel diesen Bereich nicht überstreicht.

Der endseitige Deckel des Frequenzumrichtergehäuses dient lediglich zum Abschluß des aus einem Rohrabschnitt gebildeten Gehäuseteiles und hat somit keine tragende Funktion. Der Deckel kann daher vorzugsweise als kostengünstiges Kunststoffspritzgußteil ausgebildet sein und unabhängig von der Länge des Frequenzumrichtergehäuses endseitig angebracht werden.

Das Frequenzumrichtergehäuse ist dabei fluchtend zum Motorgehäuse angeordnet und verläuft in dessen Querschnittsaußenkontur, so daß die Baugröße quer zur Motorachse durch den Frequenzumrichter nicht beeinflußt wird. Gerade diese Baugröße ist jedoch bei der Mehrzahl der Anwendungsfälle von Bedeutung.

Die Erfindung ist nachfolgend eines in der Zeichnung dargestellten Ausführungsbeispieles näher erläutert. Es zeigen:
- Fig. 1: in schematischer perspektivischer Darstellung eine Ansicht eines Elektromotors nach der Erfindung,
- Fig. 2: in vergrößerter Darstellung das erste Gehäuseteil des Frequenzumrichters in Darstellung entsprechend Fig. 1,
- Fig. 3: das erste Gehäuseteil in Darstellung nach Fig. 2, jedoch von der anderen Seite und
- Fig. 4: einen Längsschnitt durch Motor und Frequenzumrichter.

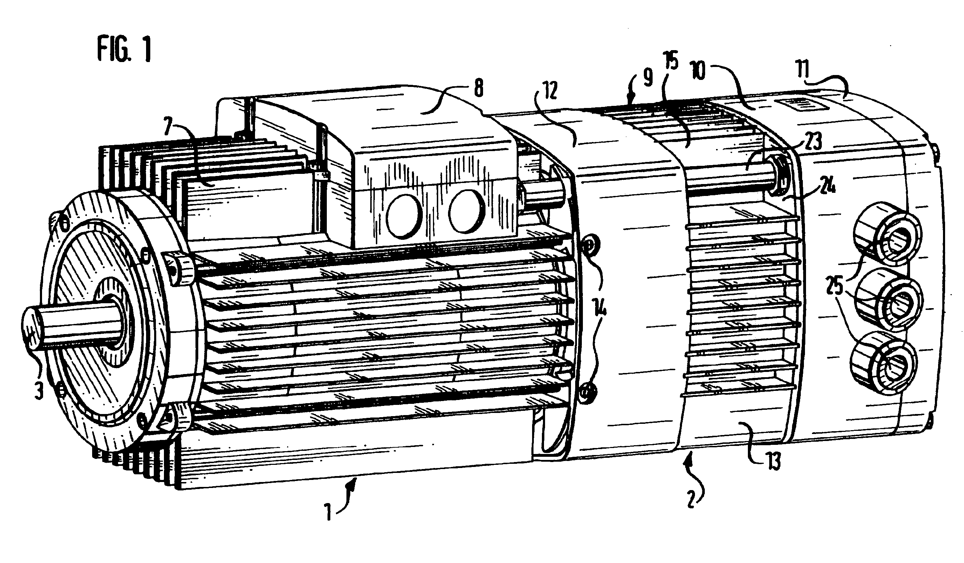

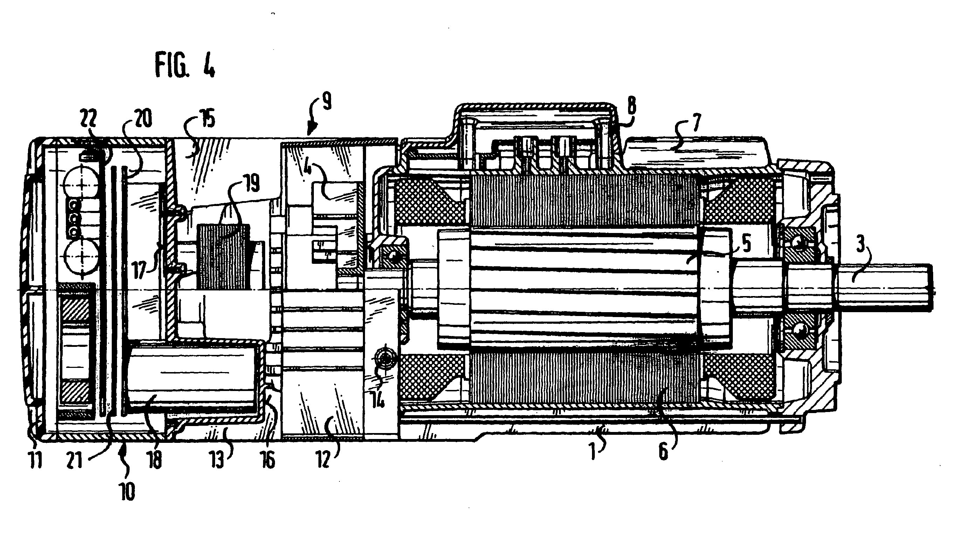

Der anhand der Figuren 1 und 4 in seiner Gesamtheit dargestellte Elektromotor weist ein Motorgehäuse 1 und ein dazu in Richtung der Motorachse fluchtend angeordnetes Frequenzumrichtergehäuse 2 auf. Zu einer Stirnseite des Motorgehäuses 1 tritt die Antriebswelle 3 des Motors aus diesem aus, zur anderen Stirnseite sitzt auf dieser Welle 3 ein Lüfterrad 4. Die Welle 3 ist in an sich bekannter Weise zu beiden Seiten des Motorgehäuses 1 gelagert und trägt einen Rotor 5, der innerhalb eines Stators 6 umläuft.

Das metallische Motorgehäuse 1 ist an seiner Außenseite mit in Richtung der Motorachse verlaufenden Kühlrippen 7 versehen, derart, daß sich eine im Querschnitt etwa rechteckige jedoch abgerundete Außenkontur ergibt. An der Oberseite des Motors ist ein die Kühlrippen 7 unterbrechender und das eigentliche Motorgehäuse nach oben hin überragender Klemmenkasten 8 angeordnet, in den die Statorwicklungsanschlüsse geführt sind und über den der elektrische Anschluß des Motors erfolgt.

Das Motorgehäuse 1 kann in an sich bekannter Weise durch eine Lüfterhaube abgeschlossen werden, dann erfolgt der elektrische Anschluß direkt im Klemmenkasten 8. Bei der anhand der Figuren dargestellten Ausführungsform ist der Motor jedoch mit einem Frequenzumrichter versehen, ein entsprechendes Frequenzumrichtergehäuse 2 schließt sich an das Motorgehäuse 1 an.

Das Frequenzumrichtergehäuse 2 besteht aus einem ersten Gehäuseteil 9, das sich direkt an das Motorgehäuse 1 anschließt, dieses seitlich übergreift und gleichzeitig die Lüfterhaube bildet, sowie einem zweiten Gehäuseteil 10 und einem Deckel 11. Das zweite Gehäuseteil 10 ist durch einen Abschnitt eines entsprechend ausgebildeten Profilstranges eines Aluminiumhohlprofiles gebildet und bestimmt die Länge des Frequenzumrichtergehäuses 2. Das erste Gehäuseteil 9 ist als metallisches Spritzgußteil ausgebildet, der Deckel 11 ist ein Kunststoffspritzteil.

Das erste Gehäuseteil 9 weist einen rohrförmigen, das Motorgehäuse 1 übergreifenden Teil 12 auf, an den sich ein berippter Teil 13 anschließt. Der rohrförmige Teil 12 weist seitliche Bohrungen 14 auf, an denen das erste Gehäuseteil 9 mittels Schrauben am Motorgehäuse 1 befestigt ist. Der berippte Teil 13 des ersten Gehäuseteiles 9 weist äußere Kühlrippen 15 auf, die im wesentlichen zu den Kühlrippen 7 des Motorgehäuses 1 fluchten. Zwischen den Kühlrippen 15 sind in dem Bereich, wo der berippte Teil 13 in den rohrförmigen Teil 12 übergeht, Durchbrüche in der Gehäusewand vorgesehen, so daß der vom Lüfterrad angesaugte Kühlluftstrom längs dieser Kühlrippen 15 in das Frequenzumrichtergehäuse 2 einströmen kann.

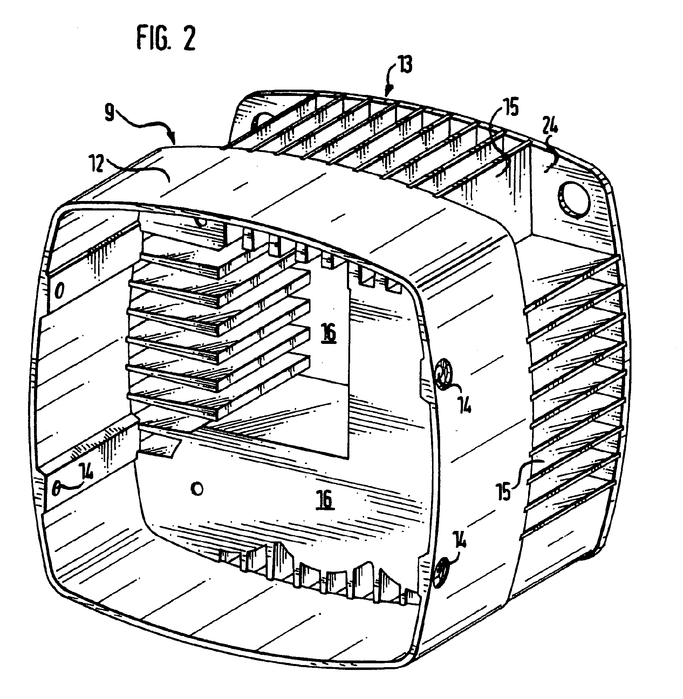

Innerhalb des ersten Gehäuseteiles 9 ist eine Querwand 16 vorgesehen, welche das Frequenzumrichtergehäuse 2 vom Lüfterraum abschließt. Diese Querwand 16 ist abgestuft ausgebildet, wie aus Fig. 2 ersichtlich ist. Auf diese Weise können auch innerhalb des ersten Gehäuseteiles 9 noch weitere Kühlrippen vorgesehen werden, insbesondere wird die innere Oberfläche des Frequenzumrichtergehäuses vergrößert, was zu einem noch intensiveren Wärmeaustausch mit dem Kühlluftstrom führt und zudem eine räumliche Anpassung an die Bauteile des Leistungskreises des Frequenzumrichters ermöglicht, wie dies anhand von Fig. 4 sichtbar ist. Diese abgestuft ausgebildete Querwand 16 ist an der zum zweiten Gehäuseteil 10 weisenden Seite als Planfläche 17 zum Wärmeanschluß der Leistungselektronik ausgebildet. Der daneben liegende, zum Motor hin abfallende Bereich ist ausgebildet zur Aufnahme der Kondensatoren 18 des Leistungkreises sowie einer Spule 19 des Frequenzumrichters. Der wärmeleitende Anschluß an die Planfläche 17 erfolgt in an sich bekannter Weise über einen Heatspreader, der seinerseits wärmeleitend mit dem wärmeerzeugenden Halbleiterbauelementen des Leistungskreises des Frequenzzumrichters verbunden ist.

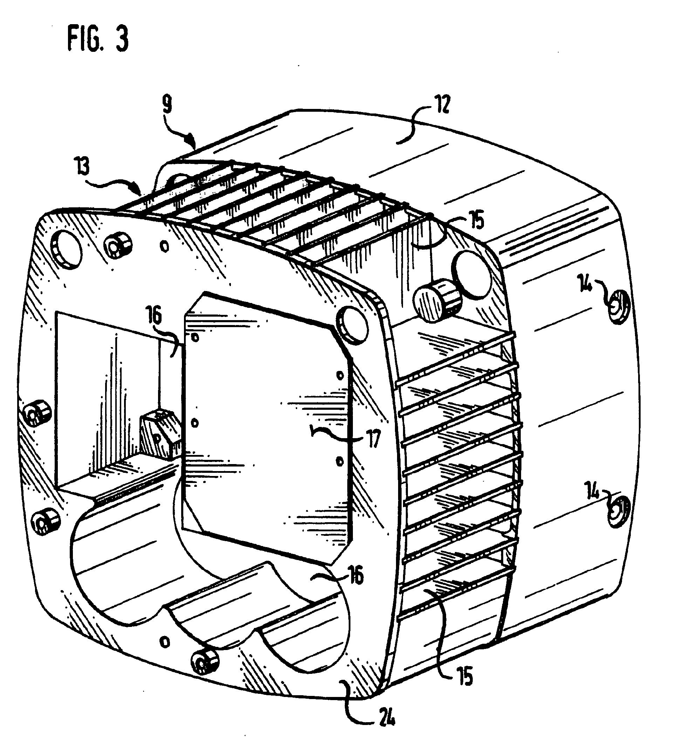

In Fig. 4 ist eine Platine 20 sichtbar, welche die wesentlichen Bauteile des Leistungskreises trägt. Es ist deutlich sichtbar, daß das erste Gehäuseteil 9 insbesondere innerhalb des berippten Teiles 13 zur Aufnahme dieser sich von der Platine 20 erhebenden Bauteile vorgesehen und ausgebildet ist (siehe Fig. 3).

Jenseits der Platine 20 schließt sich im Bereich des zweiten Gehäuseteiles 10 eine Isolierplatte 21 an sowie eine Platine 22, die weitere elektronische Bauteile des Frequenzumrichters trägt.

Bei Vorschaltung eines Frequenzumrichters erfolgt der Anschluß des Motors nicht direkt über den Klemmenkasten, sondern über den Frequenzumrichter. Die elektrische Leitungsverbindung zwischen Klemmenkasten 8 und Frequenzumrichtergehäuse 2 erfolgt über ein Rohr 23, das auf der zum Frequenzumrichtergehäuse 2 weisenden Seite des Klemmenkastens 8 anschließt, den rohrförmigen Teil 12 des ersten Gehäuseteiles 9 durchsetzt, an den Kühlrippen 15 vorbeiläuft und schließlich in einem Flansch 24 am Ende des berippten Teiles 13 des ersten Gehäuseteiles 9 in das zweite Gehäuseteil 10 mündet. Das Rohr 23 ist an seinen Enden dicht mit dem Frequenzumrichtergehäuse 2 einerseits und dem Klemmenkasten 8 andererseits verbunden, so daß sowohl der Klemmenkasten 8 als auch das Frequenzumrichtergehäuse 2 hermetisch abgeschlossen, zumindest jedoch spritzwassergeschützt ausgebildet sein können.

In dem zweiten Gehäuseteil 10 sind drei mit Gewinde versehenen Bohrungen vorgesehen, in denen aus Kunststoff bestehende Leitungsdurchführungen 25 eingeschraubt sind. Mittels dieser Leitungsdurchführungen 25 werden die elektrischen Anschlußleitungen aus dem Frequenzumrichtergehäuse 2 dicht herausgeführt.

Das zweite als Rohrabschnitt ausgebildete Gehäuseteil 10 ist über den Flansch 24 des ersten Gehäuseteiles 9, darin vorgesehene Bohrungen und entsprechende Befestigungsschrauben mit diesem befestigt. Entsprechend ist der Deckel 11 zur anderen Seite mittels Schrauben befestigt.

In einer Baureihe sind Motorengehäuse 1 unterschiedlicher Länge vorgesehen, die jedoch die gleichen Querschnittsanschlußmaße aufweisen. In gewissen Grenzen kann also die Leistung des Motors allein durch Änderung der Baulänge (bei entsprechender Anpassung des inneren Aufbaues) verändert werden. Eine entsprechende Leistungsanpassung des Frequenzumrichters ist jedoch notwendig. Mit zunehmender Motorleistung wächst insbesondere die Größe der Kondensatoren 18, die im Frequenzumrichtergehäuse unterzubringen sind. Als Längenausgleich dient hier das zweite Gehäuseteil 10, das entsprechend der erforderlichen Baulänge angelängt wird. Auf diese Weise kann das Frequenzumrichtergehäuse 2 in der Länge variiert werden, ohne in sonstiger Weise konstruktiv verändert zu werden. Es genügt also für eine Motorbaureihe gleicher Außenkontur, das Frequenzumrichtergehäuse 2 hinsichtlich des zweiten Gehäuseteiles 10 anzupassen. Die in der Herstellung aufwendigen Spritzgußteile, nämlich das erste Gehäuseteil 9 und auch der Deckel 11 bleiben unverändert. Da das zweite Gehäuseteil 10 aus einem Profilrohrabschnitt besteht, kann es in beliebiger Länge kostengünstig bereitgestellt werden.

### Bezugszeichenliste

- 1 -: Motorgehäuse
- 2 -: Frequenzumrichtergehäuse
- 3 -: Antriebswelle
- 4 -: Lüfterrad
- 5 -: Rotor
- 6 -: Stator
- 7 -: Kühlrippen des Motors
- 8 -: Klemmenkasten
- 9 -: erstes Gehäuseteil
- 10 -: zweites Gehäuseteil
- 11 -: Deckel
- 12 -: rohrförmiger Teil von 9
- 13 -: berippter Teil von 9
- 14 -: Bohrungen
- 15 -: Kühlrippen des Frequenzumrichters
- 16 -: Querwand
- 17 -: Planfläche
- 18 -: Kondensatoren
- 19 -: Spule
- 20 -: Platine
- 21 -: Isolierplatte
- 22 -: Platine
- 23 -: Rohr
- 24 -: Flansch
- 25 -: Leitungsdurchführungen

## Patentansprüche

1. Frequenzumrichtergespeister Elektromotor mit einem Kühlluftgebläse (4), dessen Kühlluftstrom zur Kühlung des Motors entlang von am Motorgehäuse (1) angeordneten Kühlrippen (7) geführt ist, bei dem der Frequenzumrichter in einem Frequenzumrichtergehäuse (2) angeordnet ist, das lösbar mit dem Motorgehäuse (1) verbunden ist und das ein erstes wärmeleitendes Gehäuseteil (9) und mindestens ein weiteres Gehäuseteil (10) aufweist, wobei das erste Gehäuseteil (9) des Frequenzumrichtergehäuses (2) die Lüfterhaube bildet und eine Querwand (16) aufweist, die zum wärmeleitenden Anschluß (17) der wärmeerzeugenden Bauteile des Leistungskreises des Frequenzumrichters vorgesehen und ausgebildet ist und das weitere Gehäuseteil (10) an einem Ende an das erste Gehäuseteil (9) anschließt, wobei das erste Gehäuseteil (9) berippt ausgebildet ist **dadurch gekennzeichnet daß** im Fußbereich von Kühlrippen (15) Durchbrüche in der Gehäusewand als Lufteintrittsöffnungen für den Kühlluftstrom vorgesehen sind und daß das erste Gehäuseteil (9) des Frequenzumrichters im Bereich seiner Querwand (16) an die Topographie der Leistungselektronik einerseits und an die Außenkontur des Lüfterrades (4) andererseits angepaßt ist.

2. Elektromotor nach Anspruch 1, **dadurch gekennzeichnet, daß** das weitere Gehäuseteil (10) des Frequenzumrichtergehäuses (2) durch ein rohrförmiges Hohlprofil gebildet, das am seinem freien Ende durch einen Deckel (11) abgeschlossen ist.

3. Elektromotor nach einem der vorhergehenden Ansprüche, **dadurch gekennzeichnet, daß** das erste und das weitere Gehäuseteil einstückig ausgebildet sind.

4. Elektromotor nach einem der vorhergehenden Ansprüche, **dadurch gekennzeichnet, daß** das Frequenzumrichtergehäuses (2) spritzwassergeschützt abgeschlossen ist.

5. Elektromotor nach einem der vorhergehenden Ansprüche, **dadurch gekennzeichnet, daß** das erste Gehäuseteil (9) ein metallisches Gußteil und das daran anschließende weitere Gehäuseteil (10) ein Metallrohrabschnitt ist.

6. Elektromotor nach einem der vorhergehenden Ansprüche, **dadurch gekennzeichnet, daß** der Klemmenkasten (8) an der Außenseite des Motorgehäuses (1) angeordnet und über mindestens ein aussenliegendes Rohr (23) mit dem Frequenzumrichtergehäuse (2) verbunden ist, durch das elektrische Leitungen geführt sind.

7. Elektromotor nach einem der vorhergehenden Ansprüche, **dadurch gekennzeichnet, daß** der endseitige Deckel (11) des Frequenzumrichtergehäuses (2) ein Kunststoffspritzgußteil ist.

8. Elektromotor nach einem der vorhergehenden Ansprüche, **dadurch gekennzeichnet, daß** das Frequenzumrichtergehäuse (2) zum Motorgehäuse fluchtet und im wesentlichen in dessen Querschnittsaußenkontur verläuft.

## Claims

1. A frequency-converter-fed electric motor with a cooling air blower (4) whose cooling air flow for cooling the motor is guided along cooling ribs (7) arranged on the motor housing (1), with which the frequency converter is arranged in a frequency converter housing (2) which is releasably connected to the motor housing (1) and which comprises a first heat-conducting housing part (9) and at least one further housing part (10), wherein the first housing part (9) of the frequency converter housing (2) forms the fan cowl and comprises a transverse wall (16) which is provided and designed for the heat-conducting connection (17) of the heat-producing components of the power circuit of the frequency converter, and the further housing part (10) at one end connects to the first housing part (9), wherein the first housing part (9) is formed ribbed **characterised in that** in the foot region of the cooling ribs (15) there are provided openings in the housing wall as air entry openings for the cooling air flow and that the first housing part (9) of the frequency converter in the region of its transverse wall (16) on the one hand is adapted to the topography of the power electronics and on the other hand to the outer contour of the fanwheel (4).

2. An electric motor according to claim 1, **characterised in that** the further housing part (10) of the frequency converter housing (2) is formed by a tubular hollow profile which at its free end is terminated by a lid (11).

3. An electric motor according to one of the preceding claims, **characterised in that** the first and the further housing part are formed as one-piece.

4. An electric motor according to one of the preceding claims, **characterised in that** the frequency converter housing (2) is terminated in a splashproof manner.

5. An electric motor according to one of the preceding claims, **characterised in that** the first housing part (9) is a metallic cast part and the further housing part (10) connecting thereto is a metal tube section.

6. An electric motor according to one of the preceding claims, **characterised in that** the terminal box (8) is arranged on the outer side of the motor housing (1) and is connected via at least one outer-lying tube (23) to the frequency converter housing (2), through which electrical leads are guided.

7. An electric motor according to one of the preceding claims, **characterised in that** the end-side lid (11) of the frequency converter housing (2) is a plastic injection moulded part.

8. An electric motor according to one of the preceding claims, **characterised in that** the frequency converter housing (2) is aligned to the motor housing and essentially runs into its cross sectional outer contour.

## Revendications

1. Moteur électrique alimenté par un convertisseur de fréquence, comportant une soufflante d'air de refroidissement (4) dont le flux d'air de refroidissement, destiné à refroidir le moteur, est dirigé le long d'ailettes de refroidissement (7) située sur le carter (1) du moteur, et dans lequel le convertisseur de fréquence est disposé dans un carter de convertisseur de fréquence (2) qui est assemblé, de façon démontable, au carter (1) du moteur et qui comporte un premier élément de carter (9), conducteur de la chaleur, et au moins un élément de carter supplémentaire (10), le premier élément de carter (9) du carter de convertisseur de fréquence (2) formant le capotage du ventilateur et comportant une paroi transversale (16) qui est prévue et aménagée pour réaliser une connexion (17), conductrice de la chaleur, des composants du circuit de puissance du convertisseur de fréquence, qui dissipent de la chaleur, tandis que l'élément de carter supplémentaire (10) se raccorde, à une extrémité, au premier élément de carter (9), le premier élément de carter (9) étant doté d'ailettes, **caractérisé en ce que**, dans la région des racines d'ailettes de refroidissement (15), des perçages sont prévus dans la paroi de carter, en tant qu'orifices d'entrée d'air pour le flux d'air de refroidissement et **en ce que** le premier élément de carter (9) du convertisseur de fréquence est, dans la région de sa paroi transversale (16), adapté, d'une part, à la topographie de l'électronique de puissance et, d'autre part, au contour extérieur du rotor (4) du ventilateur.

2. Moteur électrique selon la revendication 1, **caractérisé en ce que** l'élément de carter supplémentaire (10) du carter (2) du convertisseur de fréquence est formé par un élément profilé creux tubulaire, qui est obturé par un couvercle (11) à son extrémité libre.

3. Moteur électrique selon l'une des revendications précédentes, **caractérisé en ce que** le premier élément de carter et l'élément de carter supplémentaire sont formés en une seule pièce.

4. Moteur électrique selon l'une des revendications précédentes, **caractérisé en ce que** le carter (2) du convertisseur de fréquence est fermé d'une façon assurant une protection contre les projections d'eau.

5. Moteur électrique selon l'une des revendications précédentes, **caractérisé en ce que** le premier élément de carter (9) est une pièce métallique moulée et l'élément de carter supplémentaire (10), qui s'y raccorde, est un tronçon de tube métallique.

6. Moteur électrique selon l'une des revendications précédentes, **caractérisé en ce que** la boîte à bornes (8) est disposée sur la face extérieure du carter (1) du moteur et est reliée au carter (2) du convertisseur de fréquence par l'intermédiaire d'au moins un tube (23) placé extérieurement, à travers lequel des conducteurs électriques sont dirigés.

7. Moteur électrique selon l'une des revendications précédentes, **caractérisé en ce que** le couvercle d'extrémité (11) du carter (2) du convertisseur de fréquence est une pièce en matière plastique, moulée par injection.

8. Moteur électrique selon l'une des revendications précédentes, **caractérisé en ce que** le carter (2) du convertisseur de fréquence est dans l'alignement du carter du moteur et se place sensiblement dans le contour extérieur de sa section transversale.
